# EUROPEAN PATENT APPLICATION

(11) **EP 1 911 780 A2**
(43) Date of publication of application: **16.04.2008**
(21) Application number: 07019106.9
(22) Date of filing: 28.09.2007
(51) Int. Cl.: C08G 18/08, C08G 18/12, C08G 18/50, C09J 175/04

(54) **One-component moisture-cure polyurethane resin-based adhesive**

(30) Priority: 10.10.2006 JP 2006276302
(71) Applicant: Bayer MaterialScience AG, 51368 Leverkusen (DE)
(72) Inventor: Ohwada, Takahiko, Osaka-city 545-0003 (JP); Katamura, Kouichi, Kobe-City Hyogo pref. 658-0898 (JP)

(57) **Abstract**

A one-component moisture-cure polyurethane based adhesive composition is provided. The composition comprises (A) a prepolymer obtained from an organic polyisocyanate compound and having an average number of isocyanate groups of 2 or more per molecule; (B) a prepolymer having an average number of isocyanate groups of less than 2 per molecule; (C) a tertiary amine catalyst; and (D) an organic solvent selected from the group consisting of ether, ester and ether-ester of polyhydric alcohol.

## Description

### CROSS-REFERENCE TO RELATED APPLICATION

This application claims priority under 35 U.S.C. §119 (a-d) to Japanese Application No. 2006-276302, filed October 10, 2006.

### FIELD OF THE INVENTION

The present invention relates to a one-component (or one-liquid) moisture-cure polyurethane resin-based adhesive having safety, low odor, good application workability, fast development of initial tack and long attachment time. Particularly, the present invention relates to a one-component moisture-cure polyurethane resin-based adhesive optimal for onsite construction of plastic floor materials typified by continuous polyvinyl chloride sheets and tiles for which the initial tack development of the adhesive is needed.

### BACKGROUND OF THE INVENTION

One-component moisture-cure urethane-based adhesives containing highly volatile organic solvents such as ethyl acetate and dimethyl carbonate hitherto have been proposed as adhesives for use in applying plastic floor materials such as continuous vinyl chloride sheets and tiles directly to ground materials. For example, there is known a technique for developing initial tack sufficient to suppress a repulsive force such as warping of sheets or tiles in a short time, by using an adhesive which is obtained by dissolving in a highly volatile organic solvent an urethane polymer having a high polymerization degree and high viscosity, as described in JP-A-2002-121528 or JP-A-11-263962: in this technique, after applying the adhesive to the ground material, the viscosity of the resin is increased with the volatilization of the solvent, so that the initial tack sufficient to suppress the above repulsive force can be developed in a short time.

However, highly volatile organic solvents are accompanied by toxicities and odors attributed to their high volatilities, which are likely to arise environmental problems. In addition, most of the highly soluble solvents are low in flash points, and adhesive compositions containing such solvents are classified to the fourth type first or second oil in compliance with the fire protection law and thus are strictly regulated in their transport, maintenance, storage and handling under the codes of practice of this law.

To solve these problems, it is needed to remove such solvents or to substitute low odor- and low volatile-solvents having high boiling points, and concurrently, it is needed to largely lower the viscosities of urethane prepolymers as main raw materials for adhesive compositions. In other words, in order to decrease the viscosity of an urethane prepolymer, the urethane prepolymer is needed to be designed to have a decreased polymerization rate and a molecular weight decreased to a level at which the prepolymer can be in a liquid state at least at a normal temperature. However, these methods are hard to obtain the effect of initial tack development attributed to physical drying which is caused by the volatilization of the conventional solvents, and thus are unsuitable for the applications in which initial tack is needed.

Various proposals to solve these difficult problems are reported. For example, JP-A-11-228656 discloses a technique for improving the reactivity of an adhesive by modifying a methylene-crosslinked polyphenyl polyisocyanate with an amine-based PPG. This technique makes it possible to improve the reactivity of the adhesive with its storage stability maintained, in comparison with a method by adding a catalyst to an urethane prepolymer. However, this technique is insufficient to overcome the construction-environmental dependency of the adhesive with respect to its initial tack development and attachment time.

JP-A-9-235540 discloses a technique for obtaining a balance between initial tack development and an attachment time of an adhesive by using a obtained by using 2,4'-diphenylmethane diisocyanate, and a tertiary amine-based catalyst.

However, this adhesive has a problem in that its attachment time is concurrently shortened when the initial tack development of the adhesive is quickened to a level of volatile organic solvent-type adhesives. Therefore, it is difficult to obtain a balance between attachment time and initial tack development which is required for an adhesive for use in a construction site.

Further, JP-A-2003-221569 discloses a technique for obtaining a balance between initial tack development and an attachment time of an adhesive, wherein an aromatic urethane prepolymer, an aliphatic urethane prepolymer, a nitrogen-containing organic solvent and a tertiary amine-based catalyst are formulated. According to this technique, the initial tack of the adhesive is developed by the aromatic urethane prepolymer, the nitrogen-containing organic solvent and the tertiary amine-based catalyst, while an attachment time of a practical level for use in a construction site is obtained by the retarded reactivity of the aliphatic urethane prepolymer. However, this technique is insufficient for safety countermeasure to workers in view of odor at the construction, because N-methyl-2-pyrrolidone which is included in the Pollutant Release and Transfer Register (hereinafter referred to as "PRTR") is used as an essential component so as to improve the application workability of the adhesive while maintaining the initial tack development thereof.

### SUMMARY OF THE INVENTION

The present invention is to solve the above problems, and to provide a one-component moisture-cure polyurethane resin composition with safety, low odor, good application workability, good development of initial tack, and a long period of time in maintaining the initial tack of adhesive after its application (hereinafter referred to "attachment time") regardless of working environment of a construction site and seasonal factors. Further, the present invention provides a one-component moisture-cure polyurethane resin-based adhesive having excellent storage stability.

As a result of the present inventors' intensive efforts to solve the above-discussed problems, they have discovered the following one-component moisture-cure polyurethane resin-based adhesive, and have accomplished the present invention based on this discovery.

The present invention provides a one-component moisture-cure polyurethane resin-based adhesive comprising:
(A) a prepolymer having an average number of isocyanate groups of 2 or more in a molecule obtained from an organic polyisocyanate compound;
(B) a prepolymer having an average number of isocyanate groups of less than 2 in a molecule;
(C) a tertiary amine catalyst; and
(D) an organic solvent selected from an ether, an ester or an ether-ester of polyhydric alcohol.

The adhesives of the present invention are low in odor and are not harmful to field operators, because a highly volatile and injurious organic solvent is not used in the adhesives. Accordingly, few odor remains after the application of the adhesives, for example, next day. Therefore, the adhesives of the present invention can be used in safety for repair of apartments where people live, particularly, schools and hospitals where careful attentions are paid to chemicals which induce sick building syndrome. In addition, the adhesives of the present invention are low viscous, and thus is excellent in application workability, and their attachment time can be lengthened without deteriorating their initial tack development.

By using the adhesives of present invention, the sufficient initial tacks and sufficiently long attachment time can be obtained even when the adhesives are used to apply plastic floor materials in construction sites.

### DETAILED DESCRIPTION OF THE INVENTION

The adhesive of the present invention comprises the prepolymer (A), the prepolymer (B), the catalyst (C) and the organic solvent (D).

The prepolymer (A) of the present invention is an isocyanate group-containing prepolymer which contains a prepolymer component obtained by reacting an organic polyisocyanate compound with a polyhydric amine-based polyol (hereinafter referred to as "an amine-based polyol"), and this prepolymer (A) has at least two terminal isocyanate groups in the molecule. The amine-based polyol may be used together with a polyoxyalkylene polyol (hereinafter referred to as "polyether polyol") or other polyol, or a polyester polyol obtained by reacting an alcohol with a polybasic carboxylic acid, or a short-chain glycol (for example, in an amount of 1 to 100 parts by weight per 100 parts by weight of the amine-based polyol).

The amount of the amine-based polyol is preferably 1 to 50% by weight, more preferably 5 to 40% by weight based on the weight of the prepolymer (A).

There is no particular limit in selection of the amine-based polyol. For example, the amine-based polyol is obtained by addition polymerization of at least one selected from alkylene oxides such as ethylene oxide, propylene oxide, butylene oxide and styrene oxide, to an initiator selected from aliphatic amines such as ethylenediamine, propylenediamine, monoethylamine, trimethylenediamine, tetramethylenediamine, pentamethylenediamine, hexamethylenediamine and 1,3-diaminobutane, and aromatic amines such as o-phenylene diamine, p-phenylene diamine, tolylene diamine, triaminobenzene, 4,4'-diaminodiphenylmethane and polymethylene polyphenylpolyamine.

As the initiator for the amine-based polyol, aliphatic diamines, particularly ethylenediamine, propylenediamine, trimethylenediamine, tetramethylenediamine, pentamethylenediamine and hexamethylenediamine are preferable. Especially preferred is ethylene diamine, since the reactivity of ethylenediamine with the organic polyisocyanate compound is suitable and since the storage stability of the resultant prepolymer is good.

The polymerization degree of the amine-based polyol is such that a hydroxyl value is 5 to 700 mgKOH/g, preferably 5 to 400 mgKOH/g, particularly 5 to 100 mgKOH/g. When the hydroxyl value is 5 to 100 mgKOH/g, the resultant one-component moisture-cure polyurethane resin-based adhesive can obtain both of high initial tack and long attachment time.

There is no particular limit in selection of the polyether polyol. For example, the polyether polyol is obtained by addition polymerization of at least one selected from alkylene oxides such as ethylene oxide, propylene oxide, butylene oxide and styrene oxide, to an initiator such as ethylene glycol, propylene glycol, butylene glycol, 1,4-butanediol, 1,6-hexanediol, glycerine, trimethylolpropane, ethylbutyl propane diol, pentaerythritol, sucrose, sorbitol and bisphenol A.

The initiator for the polyether polyol is preferably propylene glycol or glycerine having 2 to 4 functional groups, particularly 2 to 3 functional groups.

The polymerization degree of the polyether polyol is such that a hydroxyl value is 5 to 700 mgKOH/g, preferably 5 to 400 mgKOH/g, particularly 5 to 100 mgKOH/g. When the hydroxyl value is 5 to 100 mgKOH/g, the resultant one-component moisture-cure polyurethane resin-based adhesive can have particularly high tack.

The amount of the polyether polyol is preferably 70% by weight or less, for example, 1 to 60% by weight, more preferably 5 to 40% by weight, based on the weight of the prepolymer (A).

There is no particular limit in selection of the polyester polyol. Examples of the polyester polyol are a condensation polymer of at least one polybasic carboxylic acid such as adipic acid, azelaic acid, sebacic acid, phthalic acid, terephthalic acid, isophthalic acid, succinic acid, maleic acid, dimer acid, hydrogenated dimer acid, dodecane dicarboxylic acid, fumaric acid, cyclopentane dicarboxylic acid, naphthalene dicarboxylic acid, naphthalic acid and biphenyl dicarboxylic acid with a glycol component such as ethylene glycol, propylene glycol, 1,3-propanediol, 1,4-butanediol, 1,5-pentanediol, 3-methyl-1,5-pentanediol, dimethylolpropane, 1,6-hexanediol, neopentyl glycol, diethylene glycol, ethylbutylpropanediol, triethylene glycol, tetraethylene glycol, polyethylene glycol, dipropylene glycol, tripropylene glycol, pentaerythritol, sucrose, sorbitol and bisphenol A; a ring-opening polymer of lactone such as caprolactone or valerolactone; and a copolymer threof.

As the above condensation polymer of the polybasic carboxylic acid with the glycol component, a condensation polymer of any of 1,4-butadienediol, 1,6-hexanediol, neopentyl glycol, 3-methyl-1,5-pentanediol with any of adipic acid and sebacic acid is preferable in view of adhesion. A condensation polymer of 3-methyl-1,5-pentanediol with adipic acid or sebacic acid is further preferable also in view of hydrolysis resistance.

The polymerization degree of the polyester polyol is such that a hydroxyl value is 5 to 700 mgKOH/g, preferably 5 to 400 mgKOH/g, particularly 5 to 100 mgKOH/g.

The amount of the polyester polyol is preferably 50% by weight or less, for example, 3 to 30% by weight, more preferably 5 to 20% by weight, based on the weight of the prepolymer (A).

In the adhesive of the present invention, if needed, a short-chain dihydric alcohol (a short-chain glycol), a dihydric phenol, a tri- to octa-hydric hydroxyl group-containing compound and other polyol can be used for the reaction with the organic polyisocyanate compound.

Preferable examples of the short-chain dihydric alcohols include ethylene glycol, propylene glycol, 1,3-propanediol, 1,4-butanediol, 1,5-pentanediol, 3-methyl-1,5-pentanediol, dimethylolpropane, 1,6-hexanediol, neopentyl glycol, diethylene glycol, ethylbutyl propanediol, triethylene glycol, tetraethylene glycol, polyethylene glycol, dipropylene glycol and tripropylene glycol. A preferable example of the dihydric phenol is bisphenol A. Preferable examples of the tri- to octa-hydric hydroxyl group-containing compounds include glycerine, trimethylolpropane, pentaerythritol, sucrose and sorbitol. Any of these compounds has no adduct of alkylene oxide such as ethylene oxide and propylene oxide. Among those, ethylbutyl propane diol is preferred.

Examples of other polyols include polycarbonate polyol, polyacetal polyol, polyacrylate polyol, polybutadiene polyol, hydrogenated polybutadiene polyol, polyolefin polyol, polythioether polyol, polyester amide polyol and polymer polyol.

Preferable as the organic polyisocyanate compound for use in the prepolymer (A) is a compound having at least two isocyanate groups in the molecule.

Examples of the compound having at least two isocyanate groups in the molecule include, but not limited to, 4,4'-diphenylmethane diisocyanate (4,4'MDI), 2,4'-diphenylmethane diisocyanate (2.4'MDI), 2,2'-diphenylmethane diisocyanate (2,2'MDI), polymethylene polyphenyl polyisocyanate (polymeric MDI), cyclic adduct of diphenylmethane diisocyanate and carbodiimide, m-phenylene diisocyanate, p-phenylene diisocyanate, 3,3'-dichloro-4,4'-biphenylene diisocyanate, hexamethylene diisocyanate, xylene diisocyanate, metaxylene diisocyanate, naphthalene diisocyanate, hydrogenated diphenylmethane diisocyanate, hydrogenated xylene diisocyanate, isophorone diisocyanate, and biuret products, adduct products, dimer products and isocyanurate products thereof.

Preferable as the organic polyisocyanate compound for use in the prepolymer (A) is an aromatic diisocyanate.

Particularly preferable is an aromatic isocyanate which is a mixture of 4,4'-MDI with 2,4'-MDI which is an isomer of 4,4'-MDI, because the resultant adhesive can obtain a good balance among low temperature storage stability, initial tack and attachment time. In the mixing ratio, the amount of 2,4'-MDI is preferably 10 to 90 parts by weight, more preferably 30 to 70 parts by weight, per 100 parts by weight of 4,4'-MDI.

Among the aromatic diisocyanates, it is not recommended to use 2,4'-toluene diisocyanate and 2,6'-toluene diisocyanate which are designated as the first chemical substances under the PRTR law, in consideration of safety, for example, in working environments or environments after the application of the adhesive.

The NCO content of the prepolymer (A) thus obtained is preferably 3.0 to 10.0% by weight. The average number of isocyanate groups in the prepolymer (A) is from 2.1 to 4.0, preferably, for example, from 2.2 to 3.7.

The prepolymer (B) in the present invention is an isocyanate group-containing prepolymer having on average less than 2 functional groups, obtained by reacting the organic polyisocyanate compound with the monohydric alkanol having 1 to 26 carbon atoms.

The organic polyisocyanate compound for use in the prepolymer (B) is preferably a polymeric MDI which contains 20 to 70% by weight of 4,4'-MDI, 20 to 70% by weight of 2,4'-MDI, 0 to 5% by weight of 2,2'-MDI and 5 to 30% by weight of a polynuclear component having 3 or more nuclei. A particularly preferable polymeric MDI contains 40 to 60% by weight of 4,4' MDI, 30 to 50% by weight of 2,4' MDI, 0 to 5% by weight of 2,2' MDI, and 5 to 25% by weight of the polynuclear component having 3 or more nuclei.

The prepolymer (B) is a prepolymer having on average less than 2 isocyanate groups in the molecule, obtained by reacting the organic polyisocyanate compound with a monohydric alkanol having 1 to 26 carbon atoms.

The monohydric alkanol having 1 to 26 carbon atoms may contain an ether linkage. An optionally olefinically unsaturated C₁-C₂₆, preferably C₆-C₁₂ (cyclo)alkanol may contain i-propanol, allyl alcohol, i-butanol, n-dodecanol, n-octadecanol, ethoxyethanol, propoxyethanol, methoxypropanol, butoxyethanol and cyclohexanol; and preferably a branched alcohol such as neopentylalcohol, 2-ethylhexanol and an trimethylhexanol isomer.

Preferably, the prepolymer (B) having on average less than 2 isocyanate groups in the molecule is obtained by reacting the monohydric alkanol having 1 to 26 carbon atoms with the organic polyisocyanate compound. In particular, the average number of isocyanate groups in the prepolymer (B) is preferably from 1.05 to 1.8, more preferably from 1.3 to 1.5.

When the average number of isocyanate groups in the molecule is less than 2, a mixture of the prepolymer (B) with the prepolymer (A) provides an adhesive with high storage stability in the absence of moisture in a sealed container, that is, an effect to inhibit a self-polymerization and a longer attachment time.

The NCO content of such a polymer (B) is preferably from 3.0 to 20.0% by weight.

The amount of the prepolymer (B) is, but not limited to, preferably 0.1 to 20 parts by weight, particularly 1 to 10 parts by weight, per 100 parts by weight of the prepolymer (A).

When the amount of the prepolymer (B) is 0.1 to 20 parts by weight, the resultant adhesive shows the excellent initial tack development and the extended attachment time, and further can be remarkably improved in storage stability after the formulation.

When the composition of the organic polyisocyanate compound is designed to be the same as a desired mixing ratio of the prepolymer (A) and the prepolymer (B), a prepolymer containing the prepolymer (A) and the prepolymer (B) may be prepared simultaneously by polymerization.

Preferably, each of the prepolymer (A) and the prepolymer (B) is singly prepared by polymerization, and the prepolymer (A) and the prepolymer (B) are mixed in a desired ratio before use.

When the prepolymer (A) and the prepolymer (B) are prepared by separate polymerizations, respectively, and then are mixed, the storage stability of an adhesive obtained after the formulation of components is remarkably improved, since traces of moistures contained in a filler and a diluting agent which are added in the formulation of the adhesive are dehydrated.

Preferably, the NCO content of a mixture of 1 to 20 parts by weight of the prepolymer (B) and 100 parts by weight of the prepolymer (A) is from 3.0 to 12.0% by weight.

To quicken the initial tack development of the adhesive of the present invention, a tertiary amine is used as the catalyst (C). Examples of the tertiary amine include triethylamine, triethylene diamine, N-methymorpholine, N-ethylmorpholine, N-methylmorpholine bis(2-dimethylaminoethyl) ether, bis(morpholinoethyl) ether, bis(2,6-dimethymorpholinoethyl) ether, bis(3,5-dimethylmorpholinoethyl) ether and imidazole. Preferred are bis(morpholinoethyl)ether, bis(2,6-dimethylmorpholinoethyl)ether and bis(3,5-dimethylmorpholinoethyl)ether, each of which has two morpholine skeletons in the molecule.

As the catalyst (C), each of the above tertiary amines may be used alone or in combination of at least two.

Although not limited to, the amount of the catalyst (C) is preferably from 0.03 to 2.5 parts by weight per 100 parts by weight of the prepolymer containing the prepolymer (A) and the prepolymer (B), in view of a balance between the initial tack development and the attachment time of the resultant adhesive. When the amount of the catalyst (C) is at least 0.03 parts by weight, the initial tack development of the resultant adhesive can be quickened. When it is at most 2.5 parts by weight, the attachment time of the resultant adhesive can be extended, and concurrently, foaming of an adhesive layer formed from the adhesive can be lessened, and further, the storage stability of the adhesive can be improved. The amount of the catalyst (C) is most preferably from 0.05 to 0.5 parts by weight. In this case, the initial tack development of the resultant adhesive can be further quickened without any adverse influence on the attachment time, and further, the storage stability of the adhesive can be improved.

In the adhesive of the present invention, the organic solvent (D) is used as a diluting agent. The organic solvent (D) is an ether of polyhydric alcohol, an ester of polyhydric alcohol or an ether-ester of polyhydric alcohol. The ether-ester of polyhydric alcohol is a derivative of polyhydric alcohol having both an ether group and an ester group.

The polyhydric alcohol is preferably a C₂-C₃₀ alcohol having 2 to 5 hydroxyl groups. Examples of the polyhydric alcohol include ethylene glycol, propylene glycol, butylene glycol, hexylene glycol, ethohexadiol, glycerine, 1,2,6-hexanetriol, and pentaerythritol. The polyhydric alcohol may be a condensate of polyhydric alcohol.

An alcohol for forming the ether with the polyhydric alcohol is preferably a C₁-C₂₀ monoalcohol. Examples of such an alcohol include methanol, ethanol, propanol, butanol, pentanol, hexanol, heptanol and octanol.

An acid for forming the ester is preferably an organic acid, for example, a C₁-C₂₀ (particularly C₂-C₅) carboxylic acid (e.g., a mono- to tetra-basic carboxylic acid, particularly a monobasic carboxylic acid). Examples of the acid include acetic acid, formic acid, propionic acid, butyric acid, valeric acid, caproic acid, caprylic acid, lauric acid, myristic acid, palmitic acid, stearic acid, oleic acid, linoleic acid, linolenic acid, cyclohexane carboxylic acid, phenylacetic acid, benzoic acid and toluic acid.

Specific examples of ethers of polyhydric alcohols (and condensates of polyhydric alcohols) include monoethers such as ethylene glycol monomethyl ether, propylene glycol monomethyl ether, diethylene glycol monomethyl ether, dipropylene glycol monomethyl ether, ethylene glycol monoethyl ether, propylene glycol monomethyl ether, diethylene glycol monoethyl ether and propylene glycol monomethyl ether; diethers such as ethylene glycol dimethyl ether, propylene glycol dimethyl ether, diethylene glycol dimethyl ether, dipropylene glycol dimethyl ether, ethylene glycol diethyl ether, propylene glycol dimethyl ether, diethylene glycol diethyl ether and propylene glycol dimethyl ether; and triethers such as trimethyl ether of pyrogallol.

Specific examples of esters of polyhydric alcohols include monoacetates such as ethylene glycol monoacetate, propylene glycol monoacetate and monoacetin; and diacetates of polyhydric alcohol such as ethylene glycol diacetate, propylene glycol diacetate and butylene glycol diacetate.

Specific examples of esters of polyhydric alcohol condensates include monoacetates such as diethylene glycol monoacetate, dipropylene glycol monoacetate and triethylene glycol monoacetate; and diacetates such as carbitol diacetate, diethylene glycol diacetate, dipropylene glycol diacetate and triethylene glycol diacetate.

A polyhydric alcohol acetate is particularly preferable as the organic solvent (D), since the use thereof does not hinder the objects of the present invention, and since it smells less and is friendly with the environment. Examples of the polyhydric alcohol acetate include ethylene glycol monomethyl ether acetate (MMGAC), ethylene glycol monoethyl ether acetate (EGA), propylene glycol monomethyl ether acetate (MMPGAC), propylene glycol acetate (PGDA), ethylene glycol monobutyl ether acetate (BMGAC), diethylene glycol monoethyl ether acetate (EDGAC), dipropylene glycol methyl ether acetate (DPMA), and diethylene glycol monobutyl ether acetate (BDGAC).

The organic solvent (D) (particularly, polyhydric alcohol acetate) having a molecular weight of 160 or more is preferred in view of handling ease and safety in working operation, because such an organic solvent has a high flash point. Particularly preferable are diethylene glycol monoethyl ether acetate and dipropylene glycol methyl ether acetate. Among them, diethylene glycol monoethyl ether acetate is more preferable. The polyhydric alcohol acetate has a high diluting efficiency to an adhesive, which makes it easy to obtain a homogeneous adhesive, and makes it possible to provide an adhesive formulation which has a low viscosity and excellent application workability. Furthermore, the polyhydric alcohol acetate is proper in evaporation rate and thus is hard to smell, as compared with highly volatile organic solvents such as ethyl acetate and butyl acetate. Thus, the polyhydric alcohol acetate is preferable in view of anti-VOC (or volatile organic compounds) (i.e. sick building syndrome).

The amount of the organic solvent (D) is preferably 5 to 30 parts by weight, particularly 10 to 25 parts by weight, per 100 parts by weight of the prepolymer (A). When the amount of the organic solvent (D) is 5 to 30 parts by weight, the resultant one-component moisture-cure polyurethane resin-based adhesive is not impaired in its initial tack development, and is also good in dilutability. In addition, in case where a one-component moisture-cure polyurethane resin-based adhesive is prepared by mixing the prepolymer (A) with the prepolymer (B), and then adding a filler, a thixotropy-imparting agent, a tackifier, etc., it is preferable to newly add 5 to 30 parts by weight, preferably 5 to 20 parts by weight of the organic solvent (D) per 100 parts by weight of the one-component moisture-cure polyurethane resin-based adhesive. When the amount of the organic solvent (D) is 5 to 30 parts by weight, the initial tack development of the resultant adhesive is not hindered, and an increase in the viscosity of the adhesive due to the addition of the fillers can be inhibited. Thus, an adhesive formulation having a viscosity of 20,000 to 50,000 mPa.s, at which the application workability of the adhesive becomes excellent, can be obtained.

If needed, the one-component moisture-cure polyurethane resin-based adhesive of the present invention may contain, for example, a filler, a thixotropy-imparting agent, or a tackifier.

Examples of the filler include, but not limited to, calcium carbonate, hydrophobically surface-treated calcium carbonate, kaolin, clay, talc, titanium oxide, organic balloon, inorganic balloon, bentonite, carbon black, rubber powder, and wollastonite. Each of these fillers may be used alone or in combination of at least two. Preferably, any of these fillers is sufficiently dried to a moisture content of 0.05% or less.

The amount of the filler is from 10 to 100 parts by weight, preferably from 20 to 80 parts by weight, per 100 parts by weight of the one-component moisture-cure polyurethane resin-based adhesive.

As the thixotropy-imparting agent, for example, colloidal silica and hydrogenated castor oil are used, each of which may be used alone or in combination of at least two.

Examples of the tackifier include a rosin resin-based tackifier, a terpene resin-based tackifier, a phenol resin-based tackifier, and a polyacrylic resin-based tackifier.

### EXAMPLES

The present invention will be explained in detail with reference to Examples below, the present invention is not limited to the following Examples. Additionally, in Examples, "part" and "%" mean "part by weight" and "% by weight", respectively, unless otherwise noted.

Evaluations of one-component moisture-cure polyurethane-based adhesive were conducted in the following methods.

### Initial adhesion development

(1) On a flexible slate of 150 mm × 70 mm × 6 mm (JIS A5430, manufactured by Nippon Testpanel Co., Ltd.), a one-component moisture-cure polyurethane-based adhesive was applied uniformly by a bar coder for the amount of coating to be 270 g/m², immediately after the application, the resultant plate was transferred in a box having constant temperature and humidity at 23°C and 50 %RH.
(2) Only initially after 20 minutes from the transfer, thereafter every 10 minutes, a soft polyvinyl chloride sheet of 120 mm × 25 mm × 1 mm containing 30% or more of a plasticizer was pressure bonded by a roll with twice reciprocation under about 3 kg load onto the flexible slate (1) such that a 40 mm × 25 mm part in the soft polyvinyl chloride sheet became an adhesion area.
(3) Immediately after bonding, a 90-degree creep test was conducted for the soft polyvinyl chloride sheet under a load of 50 g. The time exceeding 10 seconds that the soft polyvinyl chloride sheet falls by a load of 50 g is defined as a time that initial adhesion is developed.
(4) Evaluation results
   ○: Good because initial adhesion developing time is less than 40 minutes
   ×: Bad because initial adhesion developing time is not less than 40 minutes

### Attachment time

(1) A flexible slate and a soft polyvinyl chloride sheet were bonded in the same manner as in evaluations (1) and (2) of the initial adhesion development.
(2) After 20 seconds from bonding, 180-degree peel (peeling speed of 50 mm/min.) was conducted for the soft polyvinyl chloride sheet, a state that 50% or more of adhesive was left on the side of soft polyvinyl chloride sheet (hereinafter, area transfer rate) was evaluated as an attachment time.
(3) Evaluation results
   ○: Good when attachment time of area transfer rate of 50% or more is 40 minutes or more
   ×: Bad when attachment time of area transfer rate of 50% or more is less than 40 minutes

### Peel (adhesion) strength

(1) Peel (adhesion) strength between a flexible slate and a soft polyvinyl chloride sheet was measured in accordance with JIS A 5536-2003.
(2) Evaluation results
   ○: Good because peel (adhesion) strength is 60 N/mm or more
   × Bad because peel (adhesion) strength is less than 60 N/mm

### Storage stability

(1) The prepared one-component moisture-cure polyurethane-based adhesive was held in a sealed container of 50 ml after it had been replaced with nitrogen at 40°C for 30 days, then viscosity was measured at 25°C by using a B-type rotary viscometer.
(2) Evaluation results
   ○: Increasing rate of viscosity is less than 50%
   ×: Increasing rate of viscosity is not less than 50%

### Application workability

(1) Confirmation method of application workability: In a room having constant temperature and humidity adjusted at 23°C and 50 %RH, an adhesive was applied to a flexible slate of 300 mm × 600 mm × 8 mm specified in JIS A 5430 by an application method specified in JIS A 5536 using a comb trowel to confirm ease in the application.
(2) Evaluation results
   ○: Good because trowel handling in application is light
   ×: Bad because trowel handling in application is heavy

### Odor

(1) Confirmation method of odor: in a room with constant temperature and humidity adjusted at 23°C and 50 %RH, an adhesive was applied to a flexible slate of 300x600x8 mm specified by JIS A 5430 in an application method specified by JIS A 5536 using a comb trowel to confirm the presence of odor while nose got up to 20 cm from the applied surface.
(2) Evaluation results
   ○: good because eight or more among ten panelists feel few odor
   ×: unpleasant because two or more of ten panelists strongly feel odor

### Synthesis Example 1

### (1) Preparation of prepolymer (A)

To a 1L separable flask, 310 parts of an aromatic diisocyanate (MMDI) containing 40% of 2,4' MDI and 60% of 4,4' MDI was loaded, while stirring in nitrogen atmosphere, 155 parts of a polyoxyalkylene polyol (hereinafter called "polyether polyol 1") having the hydroxyl value of 56 mg KOH/g (average molecular weight of 3000) obtained by adducting alkylene oxide (propylene oxide and ethylene oxide) to glycerin as an initiator, 50 parts of a polyoxyalkylene polyol (hereinafter called "polyether polyol 2") having the hydroxyl value of 56 mg KOH/g (average molecular weight of 2000) similarly obtained by adducting alkylene oxide (propylene oxide and ethylene oxide) to propylene glycol as an initiator, 200 parts of an amine-based polyol having the hydroxyl value of 60 mg KOH/g (average molecular weight of 3700) obtained by adducting propylene oxide to ethylenediamine (EDA) as an initiator, 60 parts of a short-chain glycol having the hydroxyl value of 700 mg KOH/g and the weight-average molecular weight of 160 (2-butyl-2-ethyl-1,3-propanediol, manufactured by Kyowa Hakko Kogyo Co., Ltd.) were added, followed by reaction for 1 hour while stirring at a liquid temperature of 60-70°C in nitrogen atmosphere, then, 75 parts of a polyester polyol having the hydroxyl value of 56 mg KOH/g and the weight-average molecular weight of 2000 (manufacture by DaiNippon Ink and Chemicals Inc.; neopentyl glycol, 1,6-hexanediol/adipic acid-type polyester polyol) and 150 parts of diethyleneglycol monoethylether acetate (EDGAC, manufactured by Daicel Chemical Industries, Ltd.) were added thereto, further, followed by reaction for 7 hours while stirring at a liquid temperature of 70-80°C in nitrogen atmosphere, thereby to give a prepolymer (A) with the content of isocyanate group of 4.8% (average number of isocyanate groups in a molecule of 2.30). The viscosity was 28300 mPa.s at 25°C.

### Synthesis Example 1 (2)

### (2) Mixing of prepolymer (A) and prepolymer (B)

After the liquid temperature of the prepolymer (A) obtained in (1) was lowered to room temperature (25°C), 50 parts of a prepolymer (B) (NCO content of 16.0%) having average number of isocyanate functional groups of 1.4 after reaction obtained by reacting polymeric MDI having average number of isocyanate groups of 2.07 before reaction (comprising 50 wt% of 4,4' MDI, 40 wt% of 2,4' MDI, 4.5 wt% of 2,2' MDI, and 5.5 wt% of polynuclear component having trinucleus or more) with 2-ethylhexanol was added thereto, stirred in nitrogen atmosphere for 1 hour, thereby to give an isocyanate group-containing prepolymer having NCO content of 5.3% and viscosity of 28600 mPa.s at 25°C.

### Synthesis Example 2

### (1) Preparation of prepolymer (A)

Prepolymer (A) was obtained in the same manner as in Synthesis Example 1 except that 312 parts of MMDI and 353 parts of the amine-based polyol were used.

There was obtained an isocyanate group-containing prepolymer having NCO content of 4.4% (average number of isocyanate groups in a molecule of 2.36) and viscosity of 42600 mPa.s at 25°C.

### Synthesis Example 2 (2)

### (2) Mixing of prepolymer (A) and prepolymer (B)

After the liquid temperature of the prepolymer (A) obtained in (1) was lowered to room temperature (25°C), an isocyanate group-containing prepolymer having NCO content of 5.0% and viscosity of 41900 mPa.s at 25°C was obtained in the same manner as in Synthesis Example 1 (2).

### Synthesis Example 3

### (1) Preparation of prepolymer (A)

Prepolymer (A) was obtained in the same manner as in Synthesis Example 1 except that 308 parts of the aromatic diisocyanate, 207 parts of the polyether polyol 1 and 200 parts of the amine-based polyol having the hydroxyl value of 56 mg KOH/g (average molecular weight of 2000) obtained by adducting propylene oxide to monoethylamine (MEA) as initiator were used, but the polyether polyol 2 was not used.

There was obtained an isocyanate group-containing prepolymer having NCO content of 4.6% and viscosity of 15200 mPa.s at 25°C.

### Synthesis Example 3 (2)

### (2) Mixing of prepolymer (A) and prepolymer (B)

An isocyanate group-containing prepolymer having NCO content of 5.2% and viscosity of 15500 mPa.s at 25°C was obtained from the prepolymer (A) obtained in (1) in the same manner as in Synthesis Example 1 (2).

### Synthesis Example 4

### (1) Preparation of prepolymer (A)

Prepolymer (A) was obtained in the same manner as in Synthesis Example 1 (1) except that solvent was replaced with 150 parts by weight of diisononyl adipate (Sansocizer DINA manufactured by New Japan Chemical Co. Ltd.).

There was obtained an isocyanate group-containing prepolymer having NCO content of 4.8% and viscosity of 66000 mPa.s at 25°C.

### Synthesis Example 4 (2)

### (2) Mixing of prepolymer (A) and prepolymer (B)

An isocyanate group-containing prepolymer having NCO content of 5.3% and viscosity of 64900 mPa.s at 25°C was obtained from the prepolymer (A) obtained in (1) in the same manner as in Synthesis Example 1 (2).

### Synthesis Example 5

### (1) Preparation of prepolymer (A)

Prepolymer (A) was obtained in the same manner as in Synthesis Example 1 (1) except that solvent was replaced with 150 parts by weight of diisopropyl naphthalene (Ruetasolv DI manufactured by Rutgers Kureha Solvents Corporation)

There was obtained an isocyanate group-containing prepolymer having NCO content of 4.8% and viscosity of 90000 mPa.s at 25°C.

### Synthesis Example 5 (2)

### (2) Mixing of prepolymer (A) and prepolymer (B)

An isocyanate group-containing prepolymer having NCO content of 5.3% and viscosity of 89500 mPa.s at 25°C was obtained from the prepolymer (A) obtained in (1) in the same manner as in Synthesis Example 1 (2).

### Example 1

A one-component moisture-cure polyurethane-based adhesive was formulated by adding 63.5 parts by weight of calcium carbonate (water content of not more than 0.05%), 0.16 parts by weight of tertiary amine catalyst, Ucat 660M (bis(morpholinoethyl) ether, manufactured by San-Apro Ltd.) and 10 parts by weight of diethyleneglycol monoethylether acetate (EDGAC) to 100 parts by weight of isocyanate group-containing prepolymer obtained in Synthesis Example 1 (2).

Regarding this one-component moisture-cure polyurethane-based adhesive, performance evaluations were conducted such as initial adhesion development, attachment time, peel (adhesion) strength, odor and reducibility (solubility).

The results were all good without problem as shown in Table 2.

### Example 2

A one-component moisture-cure polyurethane-based adhesive was formulated by adding 40.8 parts by weight of calcium carbonate (water content of not more than 0.05%), 0.05 parts by weight of a tertiary amine catalyst, Ucat 660M (bis(morpholinoethyl) ether, manufactured by San-Apro Ltd.) and 10 parts by weight of EDGAC to 100 parts by weight of the isocyanate group-containing prepolymer obtained in Synthesis Example 2 (2).

Regarding this one-component moisture-cure polyurethane-based adhesive, performance evaluations were conducted such as initial adhesion development, attachment time, peel (adhesion) strength, odor, dilutability (solubility) and storage stability.

The results were all good without problem as shown in Table 2.

### Comparative Example 1

A one-component moisture-cure polyurethane-based adhesive was formulated by adding 63.5 parts by weight of calcium carbonate (water content of not more than 0.05%) and 10 parts by weight of EDGAC to 100 parts by weight of prepolymer (A) without adding prepolymer (B) to prepolymer (A) obtained in Synthesis Example 1.

Regarding this one-component moisture-cure polyurethane-based adhesive, performance evaluations were conducted such as initial adhesion development, attachment time, peel (adhesion) strength, odor, reducibility (solubility) and storage stability.
As shown in Table 2, no satisfied result was obtained due to the problem in initial adhesion development.

### Comparative Example 2

A one-component moisture-cure polyurethane-based adhesive was formulated by adding 40.8 parts by weight of calcium carbonate (water content of not more than 0.05%) and 10 parts by weight of EDGAC to 100 parts by weight of prepolymer (A) without adding prepolymer (B) to prepolymer (A) obtained in Synthesis Example 2.

Regarding this one-component moisture-cure polyurethane-based adhesive, performance evaluations were conducted such as initial adhesion development, attachment time, peel (adhesion) strength, odor, reducibility (solubility) and storage stability.

As shown in Table 2, no satisfied result was obtained due to the problem in initial adhesion development.

### Comparative Example 3

A one-component moisture-cure polyurethane-based adhesive was formulated by adding 63.5 parts by weight of calcium carbonate (water content of not more than 0.05%) and 10 parts by weight of EDGAC to 100 parts by weight of isocyanate group-containing prepolymer obtained in Synthesis Example 3 (2) without adding tertiary amine catalyst.

Various performance evaluations were conducted for this one-component moisture-cure polyurethane-based adhesive, as shown in Table 1, no satisfied result was obtained due to the problem in attachment time.

### Comparative Example 4

A one-component moisture-cure polyurethane-based adhesive was formulated by adding 63.5 parts by weight of calcium carbonate (water content of not more than 0.05%) and 10 parts by weight of EDGAC to 100 parts by weight of isocyanate group-containing prepolymer (A) obtained in Synthesis Example 1 (2) without adding tertiary amine catalyst.

Various performance evaluations were conducted for this one-component moisture-cure polyurethane-based adhesive, as shown in Table 1, no satisfied result was obtained due to the problem in initial adhesion development.

### Comparative Example 5

A one-component moisture-cure polyurethane-based adhesive was formulated by adding 63.5 parts by weight of calcium carbonate (water content of not more than 0.05%) and 10 parts by weight of diisononyl adipate (DINA) to the isocyanate group-containing prepolymer obtained in Synthesis Example 4 (2).

This one-component moisture-cure polyurethane-based adhesive had so high viscosity that application workability was poor to result in bad evaluation.

### Comparative Example 6

A one-component moisture-cure polyurethane-based adhesive was formulated by adding 63.5 parts by weight of calcium carbonate (water content of not more than 0.05%) and 10 parts by weight of diisopropyl naphthalene (DI) to the isocyanate group-containing prepolymer obtained in

### Synthesis Example 5 (2).

This one-component moisture-cure polyurethane-based adhesive had so high viscosity that application workability was poor to result in bad evaluation.

### Comparative Example 7

A one-component moisture-cure polyurethane-based adhesive was formulated by adding 40.8 parts by weight of calcium carbonate (water content of not more than 0.05%), 0.05 parts by weight of tertiary amine catalyst, Ucat 660M (bis(morpholinoethyl) ether, manufactured by San-Apro Ltd.) and 10 parts by weight of EDGAC to 100 parts by weight of prepolymer (A) without adding prepolymer (B) to prepolymer (A) obtained in Synthesis Example 2.

Regarding this one-component moisture-cure polyurethane-based adhesive, performance evaluations were conducted such as initial adhesion development, attachment time, peel (adhesion) strength, odor, reducibility (solubility) and storage stability.

As shown in Table 2, no satisfied result was obtained due to the problem in attachment time.

**Table 1**

| Synthesis example (part by weight) | | Synthesis 1 | Synthesis 2 | Synthesis 3 | Synthesis 4 | Synthesis 5 |
|---|---|---|---|---|---|---|
| (1) Preparation of prepolymer (A) aromatic diisocyanate (Containing 2,4' MDI of 40:4,4' MDI of 60 in wt%) | | 310 | 312 | 308 | 310 | 310 |
| Polyether polyol 1 | | 155 | | 207 | 155 | 155 |
| Polyether polyol 2 | | 50 | 50 | | 50 | 50 |
| (EDA) amine based polyol | | 200 | 353 | | 200 | 200 |
| (MEA) amine based polyol | | | | 200 | | |
| Short-chain glycol | | 60 | 60 | 60 | 60 | 60 |
| Polyester polyol | | 75 | 75 | 75 | 75 | 75 |
| Solvent EDGAC | | 150 | 150 | 150 | | |
| | DINA | | | | 150 | |
| | DI | | | | | 150 |
| Content of amine based polyol to prepolymer (A) (wt%) | | 20 | 35.3 | 20 | 20 | 20 |
| Content of solvent EDGAC to prepolymer (A) (wt%) | | 15 | 15 | 15 | 0 | 0 |
| NCO content (%) | | 4.8 | 4.4 | 4.6 | 4.8 | 4.8 |
| Viscosity (mPas at 25°C) | | 28300 | 42600 | 15200 | 66000 | 90000 |
| (2) Mixing of prepolymer (A) and prepolymer (B) Ratio of prepolymer (B) to prepolymer (A) (Wt%) | | Synthesis 1(2) | Synthesis 1(2) | Synthesis 3(2) | Synthesis 4(2) | Synthesis 5(2) |
| | | 4.8 | 4,8 | 4.8 | 4.8 | 4.8 |
| NCO content (%) | | 5.3 | 5.0 | 5.2 | 5.3 | 5.3 |
| Viscosity (mPas at 25°C) | | 28600 | 41900 | 16000 | 64900 | 88500 |

**Table 2**

| (1) One-component moisture-cure polyurethane based adhesive | | Ex. 1 | Ex. 2 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|
| (S: Synthesis) parts to 100 parts of prepolymer | | S1 | S2 | S1 | S2 | S3 (2) | S1 (2) | S4 (2) | S5 (2) | S2 |
| Calcium carbonate | | (2) | (2) | 63.5 | 40.8 | 63.5 | 63.5 | 63.5 | 63.5 | 40.8 |
| Solvent EDGAC | | 63.5 | 40.8 | 10.0 | 10.0 | 10.0 | 10.0 | | | 10.0 |
| | DINA | 10.0 | 10.0 | | | | | 10.0 | | |
| | DI | | | | | | | | 10.0 | |
| Tertiary amine catalyst: Ucat 660M | | 0.16 | 0.05 | | | | | | | 0.05 |
| Viscosity (Pas at 25°C) | | 35.5 | 37.0 | 35.1 | 38.7 | 20.0 | 35.5 | >70 | >70 | 35.2 |
| Evaluation results | | | | | | | | | | |
| Initial adhesion development (minute, (○= good, ×=bad) | | 30○ | 30○ | 110× | 50× | 30○ | 110× | 120× | 120× | 40× |
| Attachable time (minute, ○=good, x=bad) | | 50○ | 50○ | 60○ | 40○ | 10× | 60○ | 60○ | 60○ | 20× |
| Peel (adhesion) strength (○=good, ×=bad) | | ○ | ○ | ○ | ○ | ○ | ○ | ○ | ○ | ○ |
| Storage stability (○=good, ×=bad) | | ○ | ○ | ○ | ○ | × | ○ | ○ | ○ | ○ |
| Application workability (○=good, ×=bad) | | ○ | ○ | ○ | ○ | ○ | ○ | × | × | ○ |
| Odor (○=good, ×=bad) | | ○ | ○ | ○ | ○ | ○ | ○ | ○ | ○ | ○ |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A one-component moisture-cure polyurethane based adhesive composition comprising:
(A) a prepolymer obtained from an organic polyisocyanate compound and having an average number of isocyanate groups of 2 or more per molecule;
(B) a prepolymer having an average number of isocyanate groups of less than 2 per molecule;
(C) a tertiary amine catalyst; and
(D) an organic solvent selected from the group consisting of ether, ester and ether-ester of polyhydric alcohol.

2. The one-component moisture-cure polyurethane based adhesive of claim 1, wherein the prepolymer (A) is obtained by reacting an organic polyisocyanate compound with polyhydric amine-based polyoxyalkylene polyol and the polyhydric amine-based polyoxyalkylene polyol is 5 to 50% by weight of the prepolymer.

3. The one-component moisture-cure polyurethane based adhesive of claim 1, wherein the organic polyisocyanate compound used in prepolymer (A) comprises 10-90% by weight of 4,4'-diphenylmethane diisocyanate and 90-10% by weight of 2,4'-diphenylmethane diisocyanate.

4. The one-component moisture-cure polyurethane based adhesive of claim 1, wherein the prepolymer (B) is obtained by reacting an organic polyisocyanate compound with monovalent alkanol having carbon atoms of 1 to 26.

5. The one-component moisture-cure polyurethane based adhesive of claim 1, wherein the organic polyisocyanate compound used in prepolymer (B) comprises:
20-70% by weight of 4,4'-diphenylmethane diisocyanate;
20-70% by weight of 2,4'-diphenylmethane diisocyanate;
0-5% by weight of 2,2'-diphenylmethane diisocyanate; and
5-30% by weight of a polynuclear compound having three or more nucleii.

6. The one-component moisture-cure polyurethane based adhesive of claim 1, wherein the amount of prepolymer (B) is 0.1 to 20 parts by
weight relative to 100 parts by weight of prepolymer (A).

7. The one-component moisture-cure polyurethane based adhesive of claim 1, wherein the tertiary amine catalyst (C) has two morpholine
structures per molecule.

8. The one-component moisture-cure polyurethane based adhesive of claim 1, wherein the organic solvent (D) is polyhydric alcohol acetate.

9. The one-component moisture-cure polyurethane based adhesive of claim 1, wherein the organic solvent (D) has a molecular weight of 160 or more.

10. The one-component moisture-cure polyurethane based adhesive of claim 1, wherein the polyhydric alcohol acetate organic solvent is diethyleneglycol monoethylether acetate or dipropyleneglycol methylether acetate.
